# Europäisches Patentamt
# European Patent Office
# Office européen des brevets

(11) Veröffentlichungsnummer: **0 243 756**
**B1**

(12) **EUROPÄISCHE PATENTSCHRIFT**

(45) Veröffentlichungstag der Patentschrift:
**29.11.89**

(21) Anmeldenummer: **87105265.0**

(22) Anmeldetag: **09.04.87**

(51) Int. Cl.⁴: **B65H 23/032, B65H 26/02**

(54) Verfahren und Vorrichtung zum Führen einer laufenden Warenbahn.

(30) Priorität: **02.05.86 DE 3614981**

(43) Veröffentlichungstag der Anmeldung:
**04.11.87 Patentblatt 87/45**

(45) Bekanntmachung des Hinweises auf die Patenterteilung:
**29.11.89 Patentblatt 89/48**

(84) Benannte Vertragsstaaten:
**CH IT LI**

(56) Entgegenhaltungen:
**DE-A-3 203 452**
**DE-B-2 137 706**

(73) Patentinhaber: **Erhardt & Leimer GmbH, Leitershofer Strasse 80, D-8900 Augsburg 1(DE)**

(72) Erfinder: **Mack, Horst, Arnulfstrasse 70, D-8900 Augsburg(DE)**
Erfinder: **Scharm, Klaus, Rossinistrasse 12, D-8900 Augsburg 28(DE)**

(74) Vertreter: **Sasse, Volker, Dipl.-Ing., Parreutstrasse 27, D-8070 Ingolstadt(DE)**

**Beschreibung**

Die Erfindung betrifft ein Verfahren der im Gattungsbegriff des Patentanspruchs 1 angegebenen Art sowie eine Vorrichtung zum Durchführen des Verfahrens.

Mit der DE-A1 3 203 452 ist eine Vorrichtung zum Regeln des mittigen Verlaufs einer Warenbahn mit schwankender Bahnbreite bekannt geworden, bei der der Bahnverlauf mit zwei die beiden Kanten der Warenbahn lageabtastenden Kantenfühlern gesteuert wird. Die Regelung mag im allgemeinen für die einigermaßen geradlinige Führung einer Warenbahn ausreichen. Wenn aber die Warenbahn bestimmten Arbeitsvorgängen unterworfen werden soll, bei denen die ganz exakte Ausrichtung und Lage der Warenbahn erforderlich ist, beispielsweise wenn die Warenbahn mehrfarbig bedruckt wird, dann reicht diese bekannte Mittenregelung nicht aus.

Unvorhersehbare Einflüsse wie Temperatur oder Feuchtigkeit oder ein allgemeines Schwinden der Warenbahn führen jedoch dazu, daß sich die Lage der einzelnen Warenbahnstellen zur Warenbahnmitte und auch in der Länge verringert, so daß bei der Mittenregelung mittels der Kantenfühleinrichtung zugedachte Lage nicht mehr in einer gedachten Führungslinie laufen. Bei nacheinander aufzubringenden Drucken ergibt sich dann ein verschwommenes Druckbild, was zu einem Warenbahnausschuß führt. Aus diesem Grund überwacht bei dem bekannten Verfahren eine Bedienungsperson das Druckbild und greift in das Steuerverfahren dann ein, wenn das Druckbild zu verschwimmen beginnt. Die Bedienungsperson gibt in die Steuereinrichtung manuell beispielsweise entgegen der Verlaufsseite relativ zur gedachten Führungslinie gerichtete Korrekturimpulse ein, duch die über die Korrektureinrichtung die Warenbahn seitlich verstellt wird, bis die Druckbilder wieder scharf vorliegen. Dies ist allerdings sehr mühsam, erfordert eine geschulte Bedienungsperson und stellt eine Improvisation dar, die nicht immer zu befriedigenden Ergebnissen führt, vor allem, wenn die Warenbahn sich in der Länge verändert.

Der Erfindung liegt die Aufgabe zugrunde, ein Verfahren der eingangs genannten Art dahingehend zu verbessern, daß eine Warenbahn selbsttätig genau mit ihren Abschnitten entlang einer gedachten Führungslinie geführt und im übrigen genau auf Warenbahnmitte gesteuert wird sowie die Schaffung einer selbsttätig steuernden Vorrichtung.

Die gestellte Aufgabe wird mit den im kennzeichnenden Teil des Patentanspruchs 1 angegebenen Merkmalen gelöst.

Mit der Belegung von Druckmarken auf der Warenbahn kennzeichnet man die zu bearbeitenden Bereiche, die sich zu der Kantensteuerung parallel abtasten lassen. Dank der Verknüpfung der Korrektursignale mit Priorität der Druckmarkensignale ist es möglich, die Warenbahn alternativ nach dem Druckmarkenauftrag und bei Ausbleiben des Druckmarkenauftrages nach der Bahnkante bzw. der Warenbahnmitte zu steuern. In erster Linie wird die Warenbahn auf das Steuersignal des Druckmarkenfühlers ausgerichtet und wenn die Druckmarken exakt der gedachten Linie folgen, werden die Kanten korrigierenden Steuersignale der Fühler dazu verwendet, die Nullpunkte der Fühler neu festzulegen. Es werden auf diese Weise unerwünscht starke Verlaufbewegungen der Warenbahn zuverlässig vermieden und in jedem Falle eine exakte Warenbahnsteuerung gewährleistet. Temperatur- oder feuchtigkeitsbedingte Abstandsveränderungen zwischen der Warenbahnmitte und dem Druckmarkenauftrag führen in jedem Fall dazu, daß aufgrund der dominierenden Druckmarkensignale die Warenbahn nach den Druckmarken gesteuert wird, so daß ein scharfes Druckbild beim nachfolgenden Bedrucken sichergestellt ist. Da die Siganle ständig miteinander verknüpft werden, wird bei Vorliegen eines Druckmarkenauftrags stets nach einer kurzen durchgelaufenen Warenbahnstrecke ein scharfes Druckbild garantiert.

Eine zweckmäßige Verfahrensvariante, bei der in der Kantenfühleinrichtung an wenigstens einer Warenbahnkante ein Kantenfühler vorgesehen ist, der einen Fühlbereich bestimmter Breite mit einem Nullpunkt für die korrekte Lage der Warenbahnkante aufweist, geht aus Anspruch 2 hervor. Sobald in der Steuereinrichtung aufgrund der auftretenden Signale festgestellt wird, daß bei korrekter Lage des Druckmarkenauftrags in bezug auf den Druckmarkenfühler die Warenbahnkante beim Kantenfühler außerhalb des Nullpunktes liegt, wird der Nullpunkt der Warenbahnkante nachgeführt, so daß die oder der Warenbahnkantenfühler nicht gegen die Signale des Druckmarkenfühlers arbeitet und die Korrektureinrichtung in unerwünschter Weise beeinflußt. In der Regel wird der Nullpunkt des Kantenfühlers automatisch um die gleiche Strecke verschoben, wie die seitliche Lageabweichung der Druckmarken von einer gedachten Druckmarken-Führungslinie ist, die vom Druckmarkenfühler detektiert wird. Dadurch erfolgt die Warenbahnlaufkorrektur ohne Pendelbewegung sehr schnell.

Eine weitere, wichtige Verfahrensvariante geht aus Anspruch 3 hervor, bei der in der Kantenfühleinrichtung jeder Warenbahnkante ein Kantenfühler mit einem Nullpunkt zugeordnet ist. Hierbei wird die Führung nach der Bahnmitte ausgerichtet. Bei dieser Verfahrensvariante werden beide Nullpunkte beider Kantenfühler in Abhängigkeit von der korrekten Druckmarkenposition in der gedachten Führungslinie nachgeführt und in neuen Lagen festgelegt. Für die Verschiebung der beiden Nullpunkte ergibt sich die gleiche Strecke, die der Druckmarkenfühler als Abweichung der Druckmarke von der gedachten Druckmarken-Führungslinie detektiert hat. Die Kantenfühler arbeiten dann mit dem Druckmarkenfühler zusammen und stören dessen Auswirkung auf die Korrektureinrichtung nicht, sondern unterstützen ihn dank ihres gegenüber dem Druckmarkenfühler breiteren Fühlbereichs bei Auftreten stärkerer Verlaufbewegungen.

Wichtig ist ferner die Verfahrensmaßnahme gemäß Anspruch 4, weil die Kantenfühleinrichtung bei Ausbleiben des Druckmarken-Auftrags selbsttätig und übergangslos die alleinige Steuerung des Warenbahnlaufs übernimmt. Das letzte Druckmarkensignal bleibt so lange im Steuergerät gespeichert, bis ein neues Signal eingegeben wird.

Eine weitere, wichtige Verfahrensvariante geht aus Anspruch 5 hervor, wobei zum Anfahren der Warenbahn die Kantenfühler der Kantenfühleinrichtung auf die Warenbahnkanten einjustiert werden. Bisher war es erforderlich, die Warenbahnkantenfühler von Hand auf die Warenbahnkanten einzujustieren, wenn die Bahn langsam zu laufen anfing. Dies ist eine mühsame und zeitraubende Arbeit gewesen. Da die Steuereinrichtung auf einfache Weise zum Ansteuern der separaten Stellantriebe der Gewindestellspindeln benutzt werden kann, lassen sich die Bahnkantenfühler rasch und exakt über die Steuereinrichtung auf die Bahnkanten einjustieren, während die Bahn noch langsam anzulaufen beginnt. Die Korrektureinrichtung bleibt aber genauso außer Funktion, wie der Druckmarkenfühler, so daß die Kantenfühler ihre korrekten Positionen unverzüglich und ungestört aufsuchen können.

Wichtig ist dabei auch das Verfahrensmerkmal von Anspruch 6, weil bei Erreichen der normalen Betriebsgeschwindigkeit der Warenbahn die Kantenfühler in den richtigen Positionen einjustiert sind und praktisch übergangslos die Steuerung mittels der Korrektureinrichtung einsetzt.

Zum Durchführen des Verfahrens eignet sich eine Vorrichtung, wie sie aus Anspruch 7 hervorgeht und bei der ein mittels eines Stellantriebes verstellbarer Drehrahmen vorgesehen ist, dessen Stelltrieb über einen elektronischen Steuerteil an einen wenigstens einem Kantenfühler zugeordneten Signalauswerter ist ein parallel geschaltetes Steuergerät zum Korrigieren der mit Druckmarken belegten Warenbahnbereiche auf die gedachte Führungslinie zugeordnet. Der Druckmarkenfühler erzeugt Korrektursignale so lange die Druckmarken nicht exakt in der gedachten Führungslinie laufen, und übermittelt diese Signale über die Signalauswerteschaltung an das Steuergerät, das gleichzeitig auf die Korrektureinrichtung und auf die Kantenfühleinrichtung einwirkt. Die Auswirkung auf die Fühlerlage und das Ausrichten der Nullpunkte der Fühler auf die Warenbahnkante erfolgt erst, wenn der Signalauswerter des Druckmarkenfühlers die exakte Lage der Druckmarke zur gedachten Linie anzeigt.

Eine zweckmäßige Ausführungsform der Vorrichtung geht aus Anspruch 8 hervor, bei der die Kantenfühleinrichtung einen optischen Kantenfühler an jeder Bahnkante enthält, der in einem vorgegebenen Fühlbereich für die Verlaufbewegung der Warenbahnkante und mit einem Nullpunkt für die korrekte Lage der Warenbahnkante arbeitet. Bei dieser Ausführungsform, bei der der Nullpunkt jedes Kantenfühlers elektronisch verlagbar ist, führt der Druckmarkenfühler mittels seiner dominierenden Signale den Nullpunkt jedes Kantenfühlers so lange der Warenbahnkante nach, bis bei korrekter Lage der Druckmarken auch die Warenbahnkanten korrekt bezüglich der Kantenfühler liegen. In der Praxis gestaltet sich dies derart, daß bei Verlaufen der Druckmarken aus der gedachten Führungslinie die Korrektursignale des Druckmarkenfühlers die Korrektureinrichtung so lange beeinflussen, bis diese die Warenbahn soweit verschoben hat, daß die Druckmarken in der gedachten Führungslinie laufen. Stellt dann die Steuereinrichtung fest, daß einer oder daß beide Kantenfühler mit ihren Nullpunkten nicht auf die Warenbahnkante ausgerichtet sind, dann wird der Nullpunkt oder werden die Nullpunkte so weit verschoben, bis sie mit den Warenbahnkanten übereinstimmen. Es wird auf diese Weise sozusagen die Warenbahnmitte in Abhängigkeit von der gedachten Führungslinie und der Übereinstimmung der Druckmarken mit der gedachten Führungslinie zur einen oder zur anderen Seite automatisch verlagert.

Ein weitere, besonders wichtige Ausführungsvariante geht aus Anspruch 9 hervor. Auf den beiden getrennten Gewindestellspindeln lassen sich die beiden Kantenfühler individuell und rasch bis in die richtig einjustierte Lage verstellen.

Eine baulich einfache und zweckmäßige Ausführungsform geht ferner aus Anspruch 10 hervor. Jede Gewindespindel hat hierbei eine Doppelfunktion, indem sie einerseits für die Stellbewegung des zugeordneten Halters eines Kantenfühlers verantwortlich und andererseits gleichzeitig für die Führung des anderen Halters verantwortlich ist.

Eine weitere, zweckmäßige Ausführungsform geht aus Anspruch 11 hervor. Solche modernen, optischen Reflektionsfühler arbeiten sehr genau, haben einen verhältnismäßig breiten Fühlbereich und einen genauen Nullpunkt der sich auf elektronischem Weg problemlos verlagern läßt. Die Signale der Kantenfühler zeigen das Ausmaß und die Richtung der Verlaufbewegung der Warenbahnkante genau an, so daß die Korrektureinrichtung jederzeit exakt informiert wird, in welche Richtung Korrekturbewegungen auszuführen sind. Bei zwei vorgesehenen Kantenfühlern werden deren Signale in der Steuereinrichtung addiert und daraus ein Korrektursignal erzeugt.

In der Praxis hat es sich ferner erwiesen, die Merkmale von Anspruch 12 einzusetzen und den Druckmarkenfühler vor den Bahnkantenfühlern anzuordnen.

Schließlich ist auch das Merkmal von Anspruch 13 wichtig, weil auf diese Weise die selbsttätige Umschaltung von der Einjustierphase auf die Steuerphase möglich ist, wobei sich je nach Art und Qualität der gefahrenen Warenbahn die Geschwindigkeit, bei der umgeschaltet wird, einstellen läßt.

Anhand eines in der Zeichnung dargestellten Ausführungsbeispiels einer Vorrichtung wird das erfindungsgemäße Verfahren nachstehend erläutert.

Es zeigt:

Fig. 1 eine schematische Draufsicht auf eine Führungsvorrichtung und

Fig. 2 schematisch den Fühlbereich eines Kantenfühlers der Vorrichtung von Fig.1.

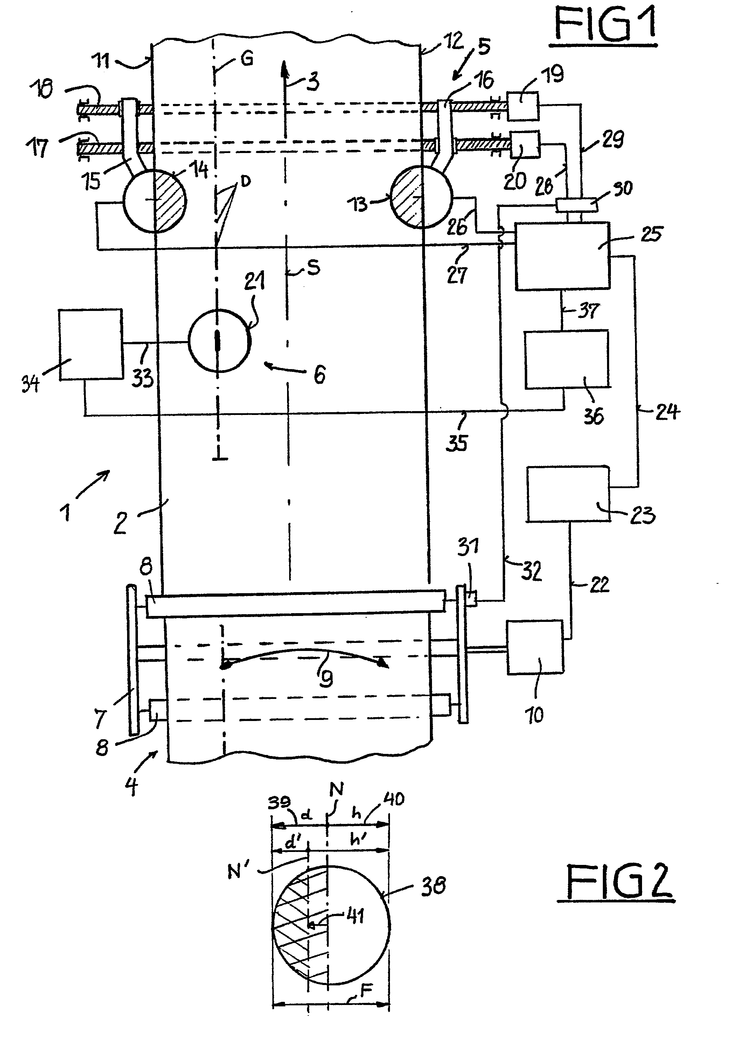

Aus Fig. 1 ist eine Vorrrichtung 1 zum Führen einer laufenden Warenbahn 2, beispielsweise einer Papier- oder Folienbahn entnehmbar, die in Richtung eines Pfeiles (Laufrichtung) 3 mit im wesentlichen kontinuierlicher Geschwindigkeit läuft. In strichpunktierten Linien S ist die Warenbahnmitte angedeutet, die in einer Sollauflinie laufen soll. Auf der Warenbahn 2 sind zumindest streckenweise Druckmarken D aufgetragen, die im Hinblick auf ein scharfes Druckbild in einer gedachten Führungslinie G laufen sollen. Der Querabstand zwischen G und S ist bekannt und wird für die Steuerung als gegebene Größe vorausgesetzt. Jedoch haben Temperatur, Feuchtigkeit oder das Schwinden der Warenbahn die nachteilige Wirkung, daß sich dieser Abstand in unvorhersehbarer Weise verändern kann, so daß dann die Grundeinstellung der Steuerung nicht mehr stimmt.

In der Vorrichtung ist eine Korrektureinrichtung 4 vorgesehen, mit der die laufende Warenbahn 2 zur einen oder zur anderen Seite verlagert werden kann.

Hinter der Korrekturvorrichtung 4 ist in Warenbahnlaufrichtung 3 eine Kantenfühleinrichtung 5 und ferner eine Druckmarkenfühleinrichtung 6 angeordnet, die über eine Steuereinrichtung 25 verbunden sind. Die Korrektureinrichtung 4 besteht bei der gezeigten Ausführungsform aus einem mit Walzen 8 ausgestatteten Drehrahmen 7, in dem die Warenbahn 2 teilweise die Walzen 8 umschlingt und von diesen in die gewünschte Lage gezogen wird. Der Drehrahmen 7 läßt sich in Richtung eines Doppelpfeiles 9 nach beiden Seiten verschwenken. Zu diesem Zweck dient ein Stellantrieb 10.

Den Warenbahnkanten 11, 12 sind Kantenfühler 13, 14 zugeordnet, die nach dem Reflexionsprinzip arbeiten und zwischen hell und dunkel unterscheiden und die jeweils ermittelte Lichtmenge zur Erzeugung von Korrektursignalen verwenden (Figur 2).

Der eine Kantenfühler (13) sitzt auf einem Halter (16), während der andere Kantenfühler (14) auf einem spiegelbildlichen Halter (15) sitzt. Die beiden Halter (15, 16) sind auf zwei zueinander parallelen Gewindestellspindeln (17, 18) derart gelagert, daß sich der Halter (15) auf der einen Gewindestellspindel (17) verschrauben läßt, während er auf der anderen Gewindestellspindel (18) abstützend gleitet. Hingegen ist der Halter (16) auf der anderen Gewindestellspindel (18) verschraubbar gehalten und gleitet auf der Gewindespindel (17). Die beiden Gewindestellspindeln (17, 18) verfügen über eigenständige Stellantriebe (19, 20), die zum Verschieben der Halter (15, 16) und damit zum Einstellen der Kantenfühler (13, 14) auf die Bahnkanten (11, 12) benutzbar sind.

In der Druckmarkenfühleinrichtung (6) ist innerhalb der Warenbahnbreite ein Druckmarkenfühler (21) angeordnet, der auf die vorerwähnte theoretische gedachte Führungslinie (G) ausgerichtet ist.

Der Stellantrieb (10) für die Korrektureinrichtung (4) ist über eine Leitung (22) mit einem elektronischen Steuerteil (23) verbunden, der über eine Leitung (24) an einen Signalauswerter (25) für die Mittenlage (oder Kantelage) der Warenbahn (2) angeschlossen ist. Die Kantenfühler (13, 14) sind über Leitungen (26, 27) ebenfalls und den Signalauswerter (25) angeschlossen.

Gleichzeitig führen vom Signalauswerter (25) Leitungen (28 und 29) zu den Stelltrieben (19 und 20) der Gewindestellspindeln (17, 18). In den Leitungen (28 und 29) ist eine Blockierschaltung (30) enthalten, die mittels einer Leitung (32) an einen Geschwindigkeitsfühler (31) am Drehrahmen (7) angeschlossen ist.

Der Druckmarkenfühler (21) steht über eine Leitung (33) mit einem Signalauswerter (34) für die seitliche Lage der Druckmarken (D) in Verbindung. Vom Signalauswerter (34) führt eine Leitung (35) zu einem Steuergerät (36), das über eine Leitung (37) an den Signalauswerter (25) angeschlossen ist. Das Steuergerät (36) dient zur Ausgabe von Änderungssignalen zum seitlichen Verschieben der Bahn über die Korrektureinrichtung (4) und gleichzeitig auch dazu, den Nullpunkt jedes Kantenfühlers (13, 14) dann zu verlagern, wenn bei vom Druckmarkenfühler (21) festgestellter korrekter Lage der Druckmarken in der gedachten Führungslinie die Bahnkanten (11, 12) nicht mit den Nullpunkten der Kantenfühler (13, 14) übereinstimmen.

Anhand von Figur 2 ist erkennbar, daß jeder Kantenfühler (13, 14) einen Fühlbereich (38) mit einer Fühlbreite (F) besitzt, in deren Mitte der Nullpunkt (N) liegt. Der Nullpunkt liegt zwischen einem hellen Bereich (h) und einem dunklen Bereich (d) beim Kantenfühler (13) der Figur 1. Stimmt die Bahnkante (12) mit dem Nullpunkt (N) überein, so ermittelt der Kantenfühler (13) eine bestimmte Lichtmenge, bei der er weiß, daß die Kante (12) genau im Nullpunkt liegt. Wandert die Bahnkante (12) in Richtung des Pfeiles (39), so verringert sich der dunkle Bereich, während die aufgenommene Lichtmenge zunimmt. Das daraus erzeugte Korrektursignal wird mit dem vom anderen Kantenfühler (14) erzeugten Korrektursignal im Signalauswerter (25) addiert und dazu benutzt, die Korrektureinrichtung (4) so zu verstellen, daß die Bahnkante (12) oder beide Bahnkanten (11 und 12) wieder zum Nullpunkt bzw. zu beiden Nullpunkten gelangen.

Wird hingegen ein Verlaufen der Druckmarken (D) aus der gedachten Führungslinie (G) vom Druckmarkenfühler (21) festgestellt, so erzeugt dieser die vorerwähnten Korrektursignale, die über das Steuergerät (36) dazu benutzt werden, mit Priorität gegenüber den Signalen der Kantenfühler (13, 14) die Kontrolleinrichtung (4) so anzusteuern, daß die Druckmarken (D) in die gedachte Führungslinie (G) verschoben werden. Dieser Verschiebebewegung würden ansich die Kantenfühler (13, 14) entgegenregeln. Aufgrund des Korrektursignals des Druckmarkenfühlers (21) wird jedoch der Nullpunkt oder werden die Nullpunkte eines oder beider Kantenfühler (13, 14), z.B. in Richtung eines Pfeiles (41) . in Figur 2 in eine neue Nullpunktlage(N') verschoben und dort festgelegt. Der entsprechend verstellte Kantenfühler, z.B. (13) in Figur 2 hat dann einen schmäleren Dunkelbereich (d') und einen breiteren Hellbereich (h') als bei mittiger Lage des Nullpunktes. Wenn jedoch bei korrekter Lage der Druckmarken in der gedachten Führungslinie (G) die zugeordnete Bahnkante (12) in der neuen Nullpunktstellung (N') läuft, erzeugt der Kantenfühler (13) kein Korrektursignal, sondern weiß, daß er jetzt eine neue Referenzlinie für den Nullpunkt zu berücksichtigen hat. Auf gleiche Weise läßt sich der Nullpunkt auch in Richtung des Pfeiles (40) verlagern und neu feststellen.

Beim Anfahren der Warenbahn (2) ist der Druckmarkenfühler (21) neutralisiert und der Stelltrieb (10) blockiert. Über den Signalauswerter (25) und die entblockte Blockierschaltung (30) werden die Stelltriebe (19, 20) so lange betätigt, bis mittels der Gewindestellspindeln (17, 18) beide Kantenfühler (13, 14) mit ihren Nullpunkten genau auf die Bahnkanten (11, 12) ausgerichtet sind. Dies erfolgt bei verhältnismäßig geringer Geschwindigkeit, die durch den Geschwindigkeitsfühler (31) abgefühlt wird. Sobald die Kantenfühler (13, 14) mit ihren Nullpunkten auf die Bahnkanten (11, 12) ausgerichtet sind, werden die Stelltriebe (19, 20) blockiert und wird nach Überschreiten einer voreingestellten Geschwindigkeit mittels des Geschwindigkeitsfühlers (31) auch dafür gesorgt, daß der Stelltrieb (10) funktionsfähig und der Druckmarkenfühler (21) aktiviert wird. Nachfolgend, d.h bei Erreichen der Betriebsgeschwindigkeit der Warenbahn (2) wird in der vorerwähnten Weise geregelt und zwar dominierend nach den Druckmarken (D) und bei Ausbleiben der Druckmarken in druckmarkenfreien Strecken der Warenbahn (2) nach der Warenbahnmitte bzw. den Bahnkanten (11, 12).

## Patentansprüche

1. Verfahren zum Führen einer laufenden Warenbahn in einer Bahnführungsvorrichtung, welche bei Verlaufen der Warenbahnmitte aus einer Sollauflinie zum Korrigieren eine Korrektureinrichtung aufweist und über eine Steuereinrichtung mit einer Kantenfühleinrichtung, bestehend aus signalgebendem Fühler an mindestens einer Bahnrandkante, verbunden ist, wobei die Steuereinrichtung die Signale der Kantenfühleinrichtung in bezug auf die Sollauflinie auswertet und an die Korrekturvorrichtung weitergibt, dadurch gekennzeichnet, daß die Warenbahn in Längsrichtung zumindest streckenweise mit Druckmarken bestückt ist und bei der Führung deren Relativlage in bezug auf eine gedachte Führungslinie überlagernd überprüft werden und bei Abweichung Steuersignale über die Steuereinrichtung sowohl an die Korrektureinrichtung gegeben als auch zum Korrigieren der Nullpunktlage des Kantenfühlers genutzt werden.

2. Verfahren nach Anspruch 1, wobei ein in der Kantenfühleinrichtung an wenigstens einer Warenbahnkante vorgesehener Fühler einen Fühlbereich bestimmter Breite mit einem auf die korrekte Sollauflinie der Warenbahnkante ausgerichteten Nullpunkt aufweist, dadurch gekennzeichnet, daß bei mit Druckmarkenfühler in einer gedachten Führungslinie korrekt laufenden Druckmarken und gleichzeitig außerhalb des Nullpunktes wenigstens eines Kantenfühlers laufender Warenbahnkante der Nullpunkt des Kantenfühlers an die Warenbahnkante verschoben und in einer neuen Nullpunktlage arretiert wird.

3. Verfahren nach Anspruch 2, wobei in der Kantenfühleinrichtung jeder Warenbahnkante ein Kantenfühler mit einem Nullpunkt angeordnet ist, dadurch gekennzeichnet, daß beide Nullpunkte der Kantenfühler in Abhängigkeit von der beim Druckmarkenfühler ermittelten Strecke zur korrekten Druckmarkenposition auf der gedachten Führungslinie verschoben und neu festgesetzt werden.

4. Verfahren nach wenigstens einem der Ansprüche 1 bis 3, dadurch gekennzeichnet, daß der Druckmarkenfühler zwischen den Druckmarkenstrecken der Warenbahn neutralisiert und der Warenbahnlauf ausschließlich mit der Kantenfühleinrichtung gesteuert wird.

5. Verfahren nach wenigstens einem der Ansprüche 1 bis 4, wobei zum Anfahren der Warenbahn die Kantenfühler der Kantenfühleinrichtung auf die Warenbahnkanten einjustiert werden, dadurch gekennzeichnet, daß zum Anfahren der Druckmarkenfühler neutralisiert und der Stellantrieb der Korrektureinrichtung blockiert wird, und daß die beiden Kantenfühler selbsttätig über die Steuereinrichtung mittels getrennter Stellantriebe mit ihren Nullpunkten auf die Warenbahnkanten einjustiert werden, und daß nachfolgend die Stellantriebe verblockt, der Druckmarkenfühler aktiviert und der Stellantrieb der Korrektureinrichtung entblockt werden.

6. Verfahren nach Anspruch 5, dadurch gekennzeichnet, daß das Verblocken der Stellantriebe für die Kantenfühlerjustierung und das Entblocken des Stellantriebs der Korrektureinrichtung selbsttätig und in Abhängigkeit vom Erreichen einer vorbestimmten Bahnlaufgeschwindigkeit erfolgt.

7. Vorrichtung zum Durchführen des Verfahrens nach wenigstens einem der Ansprüche 1 bis 6, mit einem mittels Stellantrieb (10) verstellbaren Drehrahmen (7), dessen Stellantrieb (10) über einen elektrischen Steuerteil (23) an einen wenigstens einem Kantenfühler (13, 14) zugeordneten Signalauswerter (25) für die Lage der Warenbahnmitte in der Sollauflinie (S) angeschlossen ist, dadurch gekennzeichnet, daß dem Signalauswerter (25) ein Druckmarkensteuergerät (36) zum Korrigieren der mit Druckmarken (D) ausgestatteten Warenbahn (2) in eine gedachte Führungslinie (G) parallel zugeordnet ist, und daß das Druckmarkensteuergerät (36) mit einem innerhalb der Warenbahnbreite angeordneten Druckmarkenfühler (21) und einem zwischengeschalteten Signalauswerter (34) in Schaltverbindung steht, welches zur Übertragung der Signale sowohl mit der Korrektureinrichtung (4), bestehend aus Stellantrieb (10) und Drehrahmen (7), wie auch mit der Kantenfühleinrichtung (5) verbunden ist.

8. Vorrichtung nach Anspruch 7, wobei die Kantenfühleinrichtung (5) einen optischen Kantenfühler (13, 14) an jeder Warenbahnkante (11, 12) enthält, der in einem vorgegebenen Fühlbereich (F) für die Verlaufbewegung der Warenbahnkanten (11, 12) und mit einem Nullpunkt (N) für die korrekte Lage der Warenbahnkanten (11, 12) arbeitet, dadurch gekennzeichnet, daß der Nullpunkt (N) jedes Kantenfühlers (13, 14) innerhalb des Fühlbereiches (F) auf elektronischem Weg stufenlos verlagerbar ist, und daß das Steuergerät (36) mit der elektronischen Nullpunktverstellung jedes Kantenfühlers (13, 14) in Schaltverbindung steht.

9. Vorrichtung nach den Ansprüchen 7 und 8, dadurch gekennzeichnet, daß die Kantenfühler (13, 14) auf zwei getrennten Gewindestellspindeln (17, 18) quer zur Bahnlaufrichtung (3) verstellbar gelagert sind, und daß beide Gewindestellspindeln (17, 18) selbsttätig ansteuerbare Stelltriebe (19, 20) aufweisen.

10. Vorrichtung nach Anspruch 9, dadurch gekennzeichnet, daß die Gewindestellspindeln (17, 18) zueinander parallel und beabstandete liegen, und daß jeder Kantenfühler (13, 14) auf einem Halter (15, 16), sitzt, der auf jeweils einer Gewindestellspindel (17, 18) verschraubbar sitzt und sich auf der jeweils anderen Gewindestellspindel (18, 17) verschiebbar abstützt.

11. Vorrichtung nach wenigstens einem der Ansprüche 7 bis 10, dadurch gekennzeichnet, daß die Kantenfühler (13, 14) optische Reflexionsfühler sind, die nach dem Hell/Dunkel-Prinzip mit Messen der jeweiligen Lichtmenge arbeiten und ihre Korrektursignale in Abhängigkeit vom Ausmaß und der Richtung des Kantenverlaufs erzeugen.

12. Vorrichtung nach wenigstens einem der Ansprüche 7 bis 11, dadurch gekennzeichnet, daß der Druckmarkenfühler (21) in Bahnlaufrichtung (3) vor der Kantenfühleinrichtung (5) angeordnet ist.

13. Vorrichtung nach wenigstens einem der Ansprüche 7 bis 12, dadurch gekennzeichnet, daß die Stelltriebe (19, 20) der Gewindestellspindeln (17, 18) an dem den Kantenfühler (13, 14) zugeordneten Signalauswerter (25) angeschlossen sind, und daß ein Geschwindigkeitsfühler (31) für die Bahnlaufgeschwindigkeit vorgesehen ist, der an eine Blockierschaltung (30) der Stelltriebe (19, 20) angeschlossen ist.

## Claims

1. Method for guiding a running web of material in a web guiding device, which has a correction device for correcting when the middle of the web of material does not run true to a prescribed line of running, and which is connected via a control device to an edge sensing device consisting of signal-emitting sensors at at least one edge of the web of material, the control device evaluating the signals of the edge sensing device in relation to the prescribed line of running and forwarding these to the correction device, characterized in that the web of material is provided with print marks at least over some sections in the longitudinal direction, and during guidance their relative position is monitored with regard to an ideal superimposed guide line, and in the case of deviation control signals are both sent via the control device to the correction device and used for correcting the zero-point position of the edge sensor.

2. Method according to Claim 1, for which a sensor provided in the edge sensing device at at least one edge of the web of material has a sensing region of given width with a zero point aligned to the correct prescribed line of running of the edge of the web of material, characterized in that, in the case of print marks running correctly in an ideal guide line with the print mark sensor, and at the same time the edge of the web of material running outside the zero point of at least one edge sensor, the zero point of the edge sensor is moved to the edge of the web of material and fixed in a new zero-point position.

3. Method according to Claim 2, for which an edge sensor with a zero point is arranged in the edge sensing device of each edge of the web of material, characterized in that both zero points of the edge sensors are moved and fixed anew as a function of the distance determined by the print mark sensor to the correct print mark position on the ideal guide line.

4. Method according to at least one of Claims 1 to 3, characterized in that the print mark sensor is neutralized between the print mark sections of the web of material, and the running of the web of material is solely controlled with the edge sensing device.

5. Method according to at least one of Claims 1 to 4, for which the edge sensors of the edge sensing device are aligned to the edges of the web of material for starting up the web of material, characterized in that for starting up the print mark sensor is neutralized and the actuator of the correction device is blocked, and in that both edge sensors are aligned automatically via the control device by means of separate actuators with their zero points at the edges of the web of material, and in that subsequently the actuators are blocked, the print mark sensor is activated and the actuator of the correction device is released.

6. Method according to Claim 5, characterized in that the blocking of the actuators for the edge sensor alignment and the releasing of the actuator of the correction device take place automatically and as a function of the achievement of a predetermined web running speed.

7. Device for carrying out the method according to at least one of Claims 1 to 6, having a rotating frame (7), adjustable by means of an actuator (10), which actuator (10) is connected via an electric control part (23) to a signal evaluator (25) associated with at least one edge sensor (13, 14) for the position of the middle of the web of material in the prescribed line of running (5), characterized in that in parallel there is associated with the signal evaluator (25) a print mark control device (36) for correcting the web (2) of material provided with the print marks (D) in an ideal guide line (G), and in that the print mark control device (36) is interconnected with a print mark sensor (21) arranged inside the width of the web of material and with an interposed signal evaluator (34), which for the transmission of the signals is connected both to the correction device (4), consisting of actuator (10) and rotating frame (7), and to the edge sensing device (5).

8. Device according to Claim 7, in which the edge sensing device (5) contains at each edge (11, 12) of the web of material an optical edge sensor (13, 14) which works in a predetermined sensing region (F) for the running movement of the edges (11, 12) of the web of material and with a zero point (N) for the correct position of the edges (11, 12) of the web of material, characterized in that the zero point (N) of each edge sensor (13, 14) is continuously variable within the sensing region (F) with electronic means, and in that the control device (36) is interconnected with the electronic zero-point adjustment of each edge sensor (13, 14).

9. Device according to Claims 7 and 8 characterized in that the edge sensors (13, 14) are mounted adjustably on two separate threaded adjusting spindles (17, 18) transversely to the web running direction (3), and in that both threaded adjusting spindles (17, 18) have automatically controllable actuators (19, 20).

10. Device according to Claim 9, characterized in that the threaded adjusting spindles (17, 18) lie parallel to one another and at a distance, and in that each edge sensor (13, 14) sits on a holder (15, 16), which sits so as to be screwable on in each case one threaded adjusting spindle (17, 18) and is supported so as to be displaceable on the respective other threaded adjusting spindle (18, 17).

11. Device according to at least one of Claims 7 to 10, characterized in that the edge sensors (13, 14) are optical reflection sensors which function according to the light/dark principle with measurement of the respective amount of light and generate their correction signals as a function of the extent and the direction of the edge running.

12. Device according to at least one of Claims 7 to 11, characterized in that the print mark sensor (21) is arranged in front of the edge sensing device (5) in the web running direction (3).

13. Device according to at least one of Claims 7 to 12, characterized in that the actuators (19, 20) of the threaded adjusting spindles (17, 18) are connected to the signal evaluator (25) associated with the edge sensors (13, 14), and in that a speed sensor (31) which is connected to a blocking circuit (30) of the actuators (19, 20) is provided for the web running speed.

**Revendications**

1. Procédé pour guider une nappe de tissu en déplacement dans un dispositif guide-étoffe qui, lorsque le milieu de la nappe de tissu quitte une ligne de point de consignee, présente und dispositif de correction destiné à corriger, et qui est relié par un dispositif de commande à un dispositif de détection d'arêtes, constitué d'un détecteur envoyant un signal situé au moins à une arête de bord de nappe, le dispositif de guidage évaluant les signaux du dispositif de détection d'arêtes par rapport à la ligne de point de consigne et les transmettant au dispositif de correction, caractérisé en ce que la nappe de tissu comporte au moins par intervalles dans la direction longitudinale des marques d'impression, en ce que, lors du guidage, leur position relative par rapport à une ligne de guidage idéale est vérifiée comme étant en recouvrement, et en ce que, s'il se produit un écart, des signaux de commande sont à la fois envoyés par le dispositif de commande au dispositif de correction et également utilisés pour corriger la position du point zéro du détecteur d'arêtes.

2. Procédé selon la revendication 1, dans lequel un détecteur disposé dans le dispositif de détection des arêtes au moins sur une arête de nappe présente un domaine de détection de largeur définie avec un point zéro orienté sur la ligne de consigne correcte de l'arête de nappe de tissu, caractérisé en ce que le point zéro du détecteur d'arête sur l'arête de nappe de tissu est décalé et fixé dans une nouvelle position de point zéro lorsque, le détecteur étant dans une ligne de guidage idéale, les marques d'impression se déplacent de façon correcte et qu'une arête de nappe de tissu se déplace simultanément en dehors du point zéro d'au moins un détecteur d'arête.

3. Procédé selon la revendication 2, dans lequel un détecteur d'arête à point zéro est disposé dans le détecteur d'arêtes de chaque arête de nappe de tissu, caractérisé en ce que les deux points zéro des détecteurs d'arête sont décalés vers la position correcte de marques d'impression sur la ligne de guidage idéale, et fixés à nouveau, en fonction de l'intervalle indiqué par le détecteur de marques d'impression.

4. Procédé selon au moins l'une des revendications 1 à 3, caractérisé en ce que le détecteur de marques d'impression est neutralisé entre les intervalles de marques d'impression de la nappe de tissu et en ce que le déplacement de la nappe de tissu est réglé exclusivement à l'aide du dispositif de détection d'arêtes.

5. Procédé selon l'une au moins des revendications 1 à 4, dans lequel, lors de la mise en route de la nappe de tissu, les détecteurs d'arêtes du dispositif de détection d'arêtes sont réglés sur les arêtes de nappe de tissu, caractérisé en ce que, pour la mise en route, le détecteur de marques d'impression est neutralisé et l'organe correcteur du dispositif de correction est bloqué, et en ce que les deux détecteurs d'arêtes sont réglés automatiquement par le dispositif de commande au moyen d'organes correcteurs séparés, leur point zéro étant sur les arêtes de nappe de tissu, et en ce qu'ensuite les organes correcteurs sont bloqués, le détecteur de marques d'impression est activé et l'organe correcteur du dispositif de correction est débloqué.

6. Procédé selon la revendication 5, caractérisé en ce que le blocage des organes correcteurs pour le réglage des détecteurs d'arêtes et le déblocage de l'organe correcteur du dispositif de correction se produisent automatiquement et dès lors qu'une vitesse déterminée de déplacement de nappe est atteinte.

7. Dispositif de mise en œuvre du procédé selon l'une au moins des revendications 1 à 6, comportant un cadre tournant mobile au moyen d'un organe correcteur (10), cadre dont l'organe correcteur (10) est relié par un élément de commande électrique (23) à un dispositif d'évaluation de signaux (25) affecté au moins à un détecteur d'arêtes (13, 14) destiné à déterminer la position du milieu de nappe dans la ligne de consigne (S), caractérisé en ce qu'est disposé, en parallèle au dispositif d'évaluation de signaux (25), un dispositif de commande de marques d'impression (36) pour corriger la nappe de tissu (2) comportant les marques d'impression (D) dans une ligne de guidage idéale (G), et en ce que le dispositif de commande de marques d'impression (36) est en liaison de commutation avec un détecteur (21) de marques d'impression disposé à l'intérieur de la largeur de la nappe de tissu et un dispositif d'évaluation de signaux (34) interposé, ce dispositif (36) étant relié pour la transmission des signaux tant au dispositif de correction (4) composé de l'organe correcteur (10) et du cadre tournant (7), qu'au dispositif de détection d'arêtes (5).

8. Dispositif selon la revendication 7, dans lequel le dispositif de détection d'arêtes (5) comporte, sur chaque arête de nappe de tissu (11, 12), un détecteur optique d'arêtes (13, 14) qui travaille dans un domaine de détection prédéterminé (F) pour le déplacement des arêtes de nappe de tissu (11, 12) et avec un point zéro (N) pour la position correcte des arêtes de nappe (11, 12) caractérisé en ce que le point zéro (N) de chaque détecteur d'arêtes (13, 14) est mobile de façon continue de manière électronique à l'intérieur du domaine de détection (F), et en ce que le dispositif de commande (36) est en liaison de commutation avec le réglage électronique de point zéro de chaque détecteur d'arêtes (13, 14).

9. Dispositif selon les revendications 7 et 8, caractérisé en ce que les détecteurs d'arêtes (13, 14) sont logés sur deux broches de réglage filetées séparées (17, 18) en étant mobiles transversalement à la direction (3) de déplacement de la nappe, et en ce que les deux broches de réglage filetées (17, 18) présentent des organes correcteurs (19, 20) susceptibles d'être amorcés de façon automatique.

10. Dispositif selon la revendication 9, caractérisé en ce que les broches de réglage filetées (17, 18) sont parallèles et espacées l'une de l'autre, et en ce que chaque détecteur d'arêtes (13, 14) repose sur un support (15, 16) qui repose en pouvant être vissé respectivement sur une broche de réglage filetée (17, 18) et qui s'appuie en coulissement respectivement sur l'autre broche de réglage filetée.

11. Dispositif selon l'une au moins des revendications 7 à 10, caractérisé en ce que les détecteurs d'arêtes (13, 14) sont des détecteurs optiques à réflexion, qui travaillent selon le principe clair/sombre en mesurant la quantité de lumière correspondante et que créent leurs signaux de correction en fonction de la dimension extérieure et de la direction du déplacement d'arête.

12. Dispositif selon l'une au moins des revendications 7 à 11, caractérisé en ce que des détecteurs (21) de marques d'impression sont disposés dans la direction de déplacement (3) de nappe avant le dispositif de détection d'arêtes (5).

13. Dispositif selon l'une au moins des revendications 7 à 12, caractérisé en ce que les organes correcteurs (19, 20) des broches réglables filetées (17, 18) sont raccordées au dispositif d'évaluation de signaux (25) affecté aux détecteurs d'arêtes (13, 14), et en ce qu'on dispose un détecteur de vitesse (31) de la vitesse de déplacement de nappe, ce détecteur étant relié à un circuit de blocage (30) des organes correcteurs (19, 20).

FIG1

FIG2

EP 0 243 756 B1